(19) Europäisches Patentamt
European Patent Office
Office européen des brevets

(11) **EP 4 764 470 A1**

(12) **EUROPEAN PATENT APPLICATION**
published in accordance with Art. 153(4) EPC

(43) Date of publication:
**24.06.2026 Bulletin 2026/26**

(21) Application number: **24881987.2**

(22) Date of filing: **05.08.2024**

(51) International Patent Classification (IPC):
***G01N 21/954*** *(2006.01)*     ***G01N 21/84*** *(2006.01)*

(52) Cooperative Patent Classification (CPC):
**G01N 21/84; G01N 21/954**

(86) International application number:
**PCT/JP2024/027858**

(87) International publication number:
**WO 2025/088870 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.10.2023   JP 2023184584**

(71) Applicant: **JFE Steel Corporation
Tokyo, 100-0011 (JP)**

(72) Inventors:
• **ONO, Hiroaki
  Tokyo 100-0011 (JP)**
• **KUBO, Ryuji
  Tokyo 100-0011 (JP)**
• **KASHIWABARA, Yuta
  Tokyo 100-0011 (JP)**

(74) Representative: **Haseltine Lake Kempner LLP
Bürkleinstrasse 10
80538 München (DE)**

(54) **PIPE SURFACE INSPECTING DEVICE, SURFACE INSPECTING METHOD, MANUFACTURING DEVICE, MANUFACTURING METHOD, QUALITY CONTROL METHOD, AND PIPE**

(57)    A surface inspection apparatus for a pipe according to the present invention is a surface inspection apparatus for the pipe that inspects an inner surface of a pipe as an inspection target region, the apparatus includes an imaging unit that includes an image sensor having a field of view on a surface of the inner surface, and two distinguishable light sources, and that is arranged on an axis of the pipe such that the image sensor is sandwiched between the two distinguishable light sources, a processing unit configured to acquire images obtained by imaging reflection of each of the light sources, generate a difference image between two acquired images, and detect a surface defect in the inspection target region from the generated difference image, and a scanning unit configured to scan the imaging unit along an axial direction of the pipe, in which the two distinguishable light sources irradiate the same predetermined inspection target region with illumination light, and the image sensor captures an image of the predetermined inspection target region.

FIG.1

OUTPUT INSPECTION RESULT

PROCESS-ING UNIT

SCANNING DIRECTION

EP 4 764 470 A1

## Description

Field

The present invention relates to a surface inspection apparatus for a pipe and a surface inspection method for a pipe, both of which inspect an inner surface of a pipe as an inspection target region, and further relates to a manufacturing apparatus for a pipe, a manufacturing method for a pipe, a quality control method for a pipe, and a pipe.

Background

In modern society, pipe members are used in various situations such as buildings, infrastructures such as pipelines, transport equipment, industrial machines, and the like, and the quality thereof is very important from the viewpoint of safety. In particular, defects on the surfaces of the pipe members may cause decrease in strength and destructions starting from the defects, leading to serious damages such as collapse of structures and outflow of contents in pipelines. Among such surface defects as described above, a recessed surface defect generated by pushing in of foreign matter in a manufacturing process such as rolling is directly connected to wall thinning, and baked foreign matter stuck to a rolling roll or the like causes a large number of continuous recessed surface defects with a high degree of harmfulness. It is very important to inspect such surface defects of the pipe members in the stage of materials to suppress outflow thereof as products in order to suppress occurrence of serious accidents.

For example, in a steel pipe made of iron, a product may be shipped through a process of inspecting the presence or absence of surface defects by visually inspecting the appearance of the product after forming. At this time, for the surface defects on an outer surface of the steel pipe, the visual inspection can be readily performed, enabling the inspection under a condition where the surface defect can be readily found. In contrast, for surface defects on an inner surface of the steel pipe, visual inspection is performed by looking into the inner surface from outside the steel pipe, thus making it very difficult to perform the inspection under the condition where the surface defect can be readily found, for example, because a distance to the surface defect is long and visual inspection of an inner depth portion is performed at a very shallow angle. For this reason, an internal pipe inspection to inspect the interior of a steel pipe is sometimes performed, but there are many problems, for example the internal pipe inspection is dangerous work and the internal pipe inspection is inapplicable to a steel pipe having too small diameter to perform the internal pipe inspection in the first place.

From such backgrounds, a technique to measure a state of the inner surface of the steel pipe and automatically detect the recessed surface defect has been strongly demanded, and various techniques have been developed in the past. Specifically, Patent Literature 1 describes a method of imaging an inner surface of a steel pipe with a camera and detecting a surface defect from an obtained image.

Citation List

Patent Literature

    Patent Literature 1: JP 2011-069616 A
    Patent Literature 2: JP 2015-125089 A
    Patent Literature 3: JP 2015-210150 A

Non Patent Literature

Non Patent Literature 1: "Development of Twin Illumination and Subtraction Technique for Surface Inspection", 35th Sensing Forum, 1B1-4, Aug. 2018, pp. 105-110

Summary

Technical Problem

However, in the method described in Patent Literature 1, when a pattern or the like other than the recessed surface defect is on the inner surface of the steel pipe, it is difficult to distinguish the surface defect from the pattern in the image, and there is a concern about deterioration in performance of detecting the surface defect. In particular, a mill scale steel material with an oxide film called mill scale has a non-uniform oxide film due to uneven cooling or the like, thus forming a clear pattern. However, such a pattern often has no quality problem, and therefore, the pattern needs to be distinguished from the surface defect, causing excessive detection of the surface defect.

The present invention has been made in view of the above problems, and an object of the present invention is to provide a surface inspection apparatus for a pipe and a surface inspection method for a pipe that enable accurate detection of a recessed surface defect generated in an inner surface of a pipe having a pattern on the surface, with a simple device configuration. Another object of the present invention is to provide a manufacturing apparatus for a pipe, a manufacturing method for a pipe, a quality control method for a pipe, for providing a high-quality pipe.

Solution to Problem

(1) To solve the problem and achieve the object, a surface inspection apparatus for a pipe according to the present invention is the apparatus inspecting an inner surface of the pipe as an inspection target region. The apparatus includes: an imaging unit that includes an image sensor having a field of view on a surface of the inner surface, and two distinguishable light sources, and that is arranged on an axis of the pipe such that the image sensor is sandwiched between the two distinguishable light sources; a processing unit configured to acquire images obtained by imaging reflection of each of the light sources, generate a difference image between two acquired images, and detect a surface defect in the inspection target region from the generated difference image; and a scanning unit configured to scan the imaging unit along an axial direction of the pipe, wherein the two distinguishable light sources irradiate a same predetermined inspection target region with illumination light, and the image sensor captures an image of the predetermined inspection target region.

(2) Moreover, in the surface inspection apparatus for the pipe according to above (1), an imaging pitch of the image sensor along the axial direction of the pipe may be smaller than a value obtained from an inside radius of the pipe, a maximum displacement amount of the image sensor assumed when scanning the imaging unit along the axial direction of the pipe, an overlapping width in the axial direction of two fields of view of the image sensor adjacent in the axial direction of the pipe, and an angle of view of the image sensor in the axial direction of the pipe.

(3) Moreover, in the surface inspection apparatus for the pipe according to above (1) or (2), the image sensor may be a full-circumference image sensor that is configured to capture an image covering an entire area in a circumferential direction of an inner surface of the pipe in a single imaging.

(4) Moreover, in the surface inspection apparatus for the pipe according to any one of above (1) to (3), wherein an angle difference between an angle formed by a specular reflection direction of illumination light from an upstream side light source that is the light source arranged on an upstream side from the image sensor in an axial direction of the pipe and an imaging direction of the image sensor, and an angle formed by a specular reflection direction of illumination light from a downstream side light source that is the light source arranged on a downstream side from the image sensor in the axial direction of the pipe and the imaging direction of the image sensor, may be larger than a value obtained from an inside radius of the pipe, a maximum displacement amount of the image sensor assumed when scanning the imaging unit along the axial direction of the pipe, an angle of view of the image sensor in the axial direction of the pipe, and a distance from the image sensor to the upstream side light source or the downstream side light source.

(5) Moreover, in the surface inspection apparatus for the pipe according to any one of above (1) to (4), the two distinguishable light sources may be an annular illumination.

(6) Moreover, in the surface inspection apparatus for the pipe according to any one of above (1) to (5), the scanning unit may scan the image sensor along a central axis of the pipe.

(7) Moreover, a surface inspection method for a pipe according to the present invention is the method for inspecting an inner surface of the pipe as an inspection target region. The method includes: a processing step of acquiring images obtained by imaging reflection of each of the light sources, generating a difference image between two acquired images, and detecting a surface defect in the inspection target region from the generated difference image, by using an imaging unit that includes an image sensor having a field of view on a surface of the inner surface, and two distinguishable light sources, and that is arranged on an axis of the pipe such that the image sensor is sandwiched between the two distinguishable light sources; and a scanning step of scanning the imaging unit along an axial direction of the pipe, wherein the processing step includes a step of using the two distinguishable light sources to irradiate a same predetermined inspection target region with illumination light, and using the image sensor to capture an image of the predetermined inspection target region.

(8) Moreover, in the surface inspection method for the pipe according to above (7), an imaging pitch of the image sensor in the axial direction of the pipe may be smaller than a value obtained from an inside radius of the pipe, a maximum displacement amount of the image sensor assumed when scanning the imaging unit along the axial direction of the pipe, an overlapping width in the axial direction of two fields of view of the image sensor adjacent in the axial direction of the pipe, and an angle of view of the image sensor in the axial direction of the pipe.

(9) Moreover, in the surface inspection method for the pipe according to above (7) or (8), the image sensor may be a full-circumference image sensor that is configured to obtain an image covering an entire area in a circumferential direction of an inner surface of the pipe in a single imaging.

(10) Moreover, a manufacturing apparatus for a pipe according to the present invention includes the surface inspection apparatus for the pipe according to any one of above (1) to (6).

(11) Moreover, a manufacturing method for a pipe according to the present invention includes inspecting an inner surface of the pipe by using the surface inspection method for the pipe according to any one of above (7) to (9) to manufacture the pipe based on an inspection result.

(12) Moreover, a quality control method for a pipe according to the present invention includes inspecting an inner surface of the pipe by using the surface inspection method for the pipe according to any one of above (7) to (9) to control quality of the pipe based on an inspection result.

(13) Moreover, a pipe according to the present invention is the pipe that has quality ensured by the surface inspection method for the pipe according to any one of above (7) to (9).

Advantageous Effects of Invention

The surface inspection apparatus for a pipe and the surface inspection method for a pipe according to the present invention make it possible to accurately detect the recessed surface defect generated in the inner surface of the pipe having the pattern on the surface, with the simple device configuration. Furthermore, the manufacturing apparatus for a pipe, the manufacturing method for a pipe, the quality control method for a pipe, and the pipe according to the present invention make it possible to provide the high-quality pipe.

BRIEF DESCRIPTION OF THE DRAWINGS

FIG. 1 is a schematic diagram illustrating an overall configuration of a surface inspection apparatus according to an embodiment of the present invention.
FIG. 2 is a schematic diagram illustrating a configuration of a modification of a scanning unit illustrated in FIG. 1.
FIG. 3 is a schematic diagram illustrating a configuration of an imaging unit illustrated in FIG. 1.
FIG. 4 illustrates diagrams of a configuration of a downstream side optical system, an inner surface image, and a difference image obtained from the inner surface image.
FIG. 5 is a schematic diagram illustrating a configuration of an upstream side light source and a downstream side light source.
FIG. 6 is a schematic diagrams illustrating a configuration of a full-circumference camera.
FIG. 7 is a schematic diagram illustrating a configuration of a modification of the full-circumference camera.
FIG. 8 is a schematic diagram illustrating a configuration of a modification of the full-circumference camera.
FIG. 9-1 is a schematic diagram illustrating a configuration of the full-circumference camera.
FIG. 9-2 is a schematic diagram illustrating a configuration of the full-circumference camera.
FIG. 10 is a flowchart illustrating a procedure of image processing according to an embodiment of the present invention.
FIG. 11 illustrates diagrams of a procedure of the image processing illustrated in FIG. 10.
FIG. 12 illustrates diagrams of light and dark patterns of a recessed surface defect and a protruded surface defect, FIG. 12(a) illustrates a light and dark pattern of the recessed surface defect, and FIG. 12(b) illustrates a light and dark pattern of the protruded surface defect.
FIG. 13 illustrates diagrams of an example of the recessed surface defect detected by the image processing illustrated in FIG. 10.
FIG. 14 illustrates schematic diagrams of a configuration of the scanning unit.
FIG. 15 illustrates schematic diagrams of a configuration of the scanning unit.
FIG. 16 is a diagram illustrating an example of a defect map.
FIG. 17 is a schematic diagram illustrating an exemplary configuration of a marking device.
FIG. 18 is a schematic diagram illustrating an exemplary configuration of a marking device.

Description of Embodiments

Hereinafter, a configuration of a surface inspection apparatus according to an embodiment of the present invention and an operation thereof will be described with reference to the drawings.

[Overall configuration]

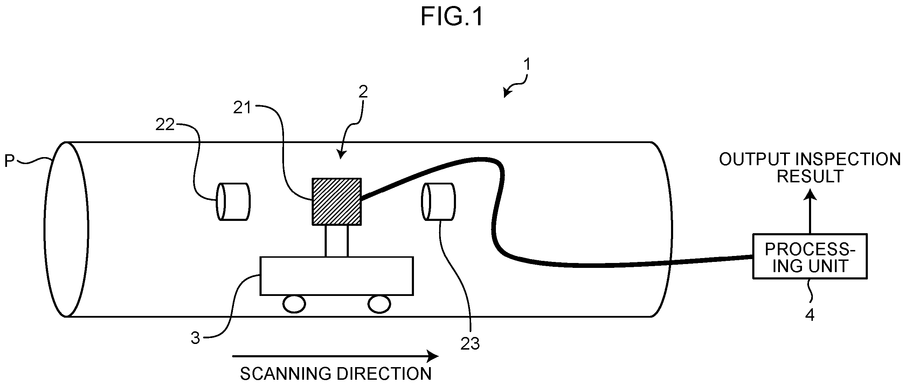

First, an overall configuration of the surface inspection apparatus according to an embodiment of the present invention will be described with reference to FIG. 1.

FIG. 1 is a schematic diagram illustrating an overall configuration of the surface inspection apparatus according to an embodiment of the present invention. As illustrated in FIG. 1, the surface inspection apparatus 1 according to an embodiment of the present invention is an apparatus that inspects the whole circumference of an inner surface of a steel pipe P by scanning an inspection target region in an axial direction of the steel pipe P, with the inner surface of the steel pipe P as the inspection target region, and includes an imaging unit 2, a scanning unit 3, and a processing unit 4.

The imaging unit 2 includes an image sensor (hereinafter, referred to as full-circumference camera) 21 that is configured to image the entire area (i.e., all directions) in a circumferential direction of the inner surface of the steel pipe P at a time, an upstream side light source 22 that is provided on an upstream side in a scanning direction, and a downstream side light source 23 that is provided on a downstream side in the scanning direction. The full-circumference camera 21 corresponds to the image sensor according to the present invention, in particular, a full-circumference image sensor. The full-circumference camera 21 is arranged on the axis of the steel pipe P between the upstream side light source 22 and the downstream side light source 23. The full-circumference camera 21 separately images reflection of illumination light, emitted from the upstream side light source 22 and the downstream side light source 23 to the inner surface of the steel pipe P, at each scanning position to capture two inner surface images, and inputs data of the two inner surface images to the processing unit 4 via an electrical communication line.

Note that the present embodiment uses the full-circumference camera 21 that is configured to image the inner surface of the steel pipe P in all directions in the circumferential direction at a time, but the present invention is not limited to the present embodiment. The image sensor may image an area of a part of the inner surface of the steel pipe P in the circumferential direction at a time. In addition, a plurality of image sensors each of which images an area of a part of the inner surface of the steel pipe P in the circumferential direction at a time may be provided. In this configuration, depending on the situation of the steel pipe P, only the area of a part of the inner surface of the steel pipe P in the circumferential direction may be set as an imaging target region (inspection target region). Furthermore, in this configuration, if an area of a part in the circumferential direction is captured in a single imaging and imaging is repeatedly performed a plurality of times while changing imaging positions of the plurality of image sensors in the circumferential direction, the same effect as that of the full-circumference camera 21 can be obtained. Meanwhile, it is most preferable to use the full-circumference image sensor configured to image the inner surface of the steel pipe P in all directions in the circumferential direction at a single time, in consideration that, for example, high work efficiency can be achieved with only a single imaging instead of multiple imaging, processing of combining the obtained inner surface images is not required, alignment of the inner surface images in the circumferential direction is not required, and the entire area of the inner surface of the steel pipe P in the circumferential direction can be imaged without a loss.

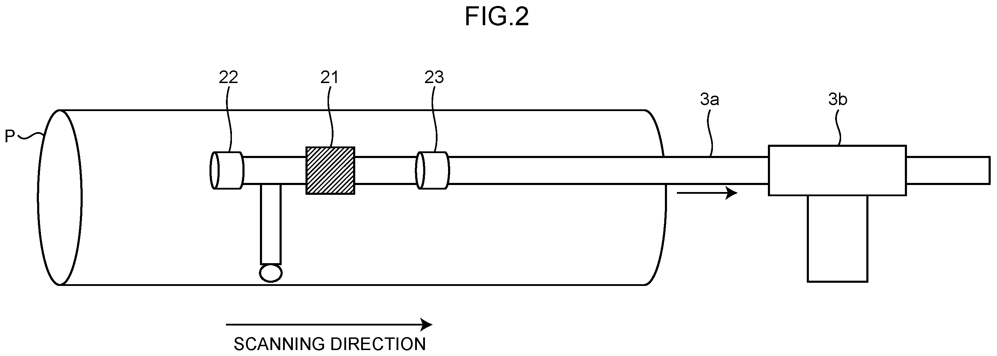

The scanning unit 3 includes a carriage, and is mounted with the imaging unit 2. The scanning unit 3 travels on the inner surface of the steel pipe P in the axial direction of the steel pipe P to scan a position of the imaging unit 2 in the axial direction of the steel pipe P. An encoder is installed on an axle of the carriage constituting the scanning unit 3, the number of rotations of a wheel of the carriage is counted by using the encoder, thus enabling identification of the position (scanning position) of the imaging unit 2 in the axial direction of the steel pipe P. The carriage preferably has a structure that does not block a field of view of the imaging unit 2 or the irradiation with the illumination light. Furthermore, when the processing unit 4 and a battery are lightweight, the processing unit 4 and the battery may be mounted on the scanning unit 3 together with the imaging unit 2. Furthermore, the carriage may be powered or driven manually or mechanically. Note that the scanning unit 3 may have a configuration as illustrated in FIG. 2, instead of the carriage. In the configuration illustrated in FIG. 2, the scanning unit 3 includes a rod-shaped member 3a that extends in the axial direction of the steel pipe P and that has a front end portion with the full-circumference camera 21, the upstream side light source 22, and the downstream side light source 23 mounted, and a scanning mechanism 3b that moves the rod-shaped member 3a in the axial direction of the steel pipe P. In this configuration, the rod-shaped member 3a desirably has sufficient rigidity to support the imaging unit 2, and if necessary, a wheel may be mounted to the front end portion to support the imaging unit 2.

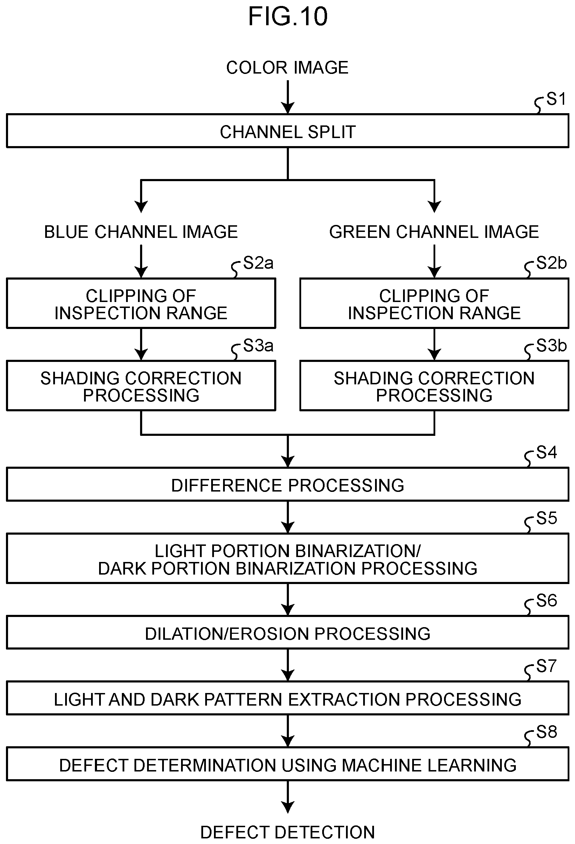

The processing unit 4 includes an information processing device such as a computer, and is connected to the full-circumference camera 21 via the electrical communication line. The processing unit 4 performs image processing on the two inner surface images input from the imaging unit 2 to detect a recessed surface defect in an imaged region of the inner surface image, and outputs information about the detected recessed surface defect (e.g., circumferential position and axial position), as an inspection result. For an image processing method, it is possible to apply a method (e.g., see Patent Literatures 2 and 3) to detect the harmful recessed surface defect finally after shading correction, difference processing, defect candidate detection using a light and dark pattern, and determination of a degree of harmfulness using machine learning, in this order. A specific example of the image processing will be described later with reference to FIGS. 10 to 13.

[Configuration of imaging unit]

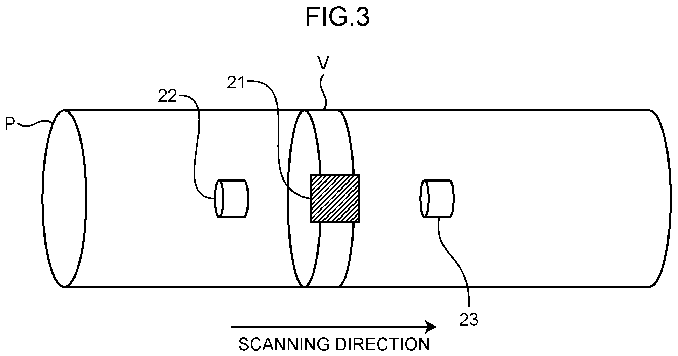

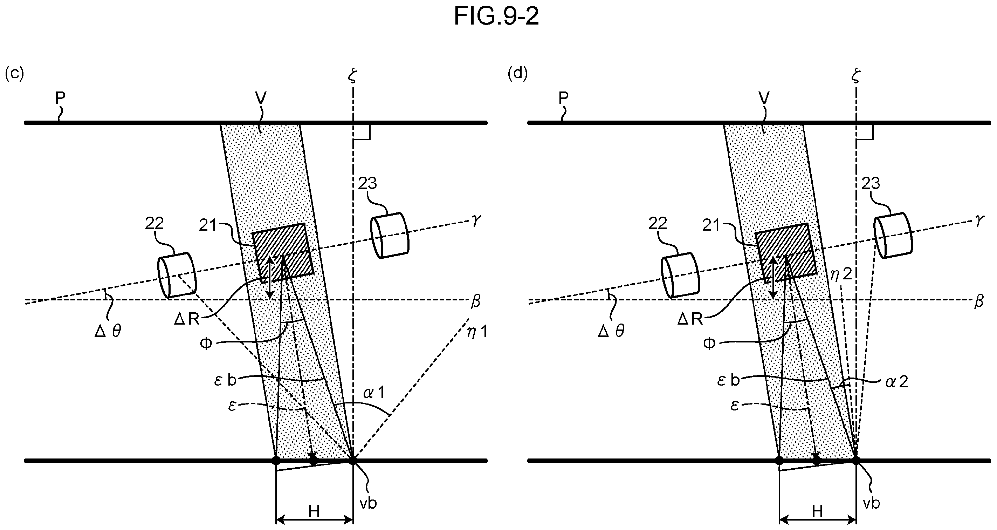

Next, a configuration of the imaging unit 2 will be described in detail with reference to FIGS. 3 to 9-2.

FIG. 3 is a schematic diagram illustrating a configuration of the imaging unit 2 illustrated in FIG. 1. As illustrated in FIG. 3, in the present embodiment, the full-circumference camera 21 is arranged on a central axis of the steel pipe P so as to look at the inner surface of the steel pipe P in a normal direction. Furthermore, the upstream side light source 22 and the downstream side light source 23 are arranged on the upstream side and the downstream side in the scanning direction of the full-circumference camera 21, respectively, and the upstream side light source 22 and the downstream side light source 23 irradiate the inspection target region in a field of view V of the full-circumference camera 21 with the illumination light. At this time, as described in Non Patent Literature 1, when the light projection/reception angle of an upstream side optical system and the light projection/reception angle of a downstream side optical system have identical conditions as much as possible, it is possible to enhance the effect of removing a pattern signal due to a difference between the two inner surface images. Hereinafter, an optical system implemented by the upstream side light source 22 and the full-circumference camera 21 is referred to as the upstream side optical system, and an optical system implemented by the downstream side light source 23 and the full-circumference camera 21 is referred to as the downstream side optical system.

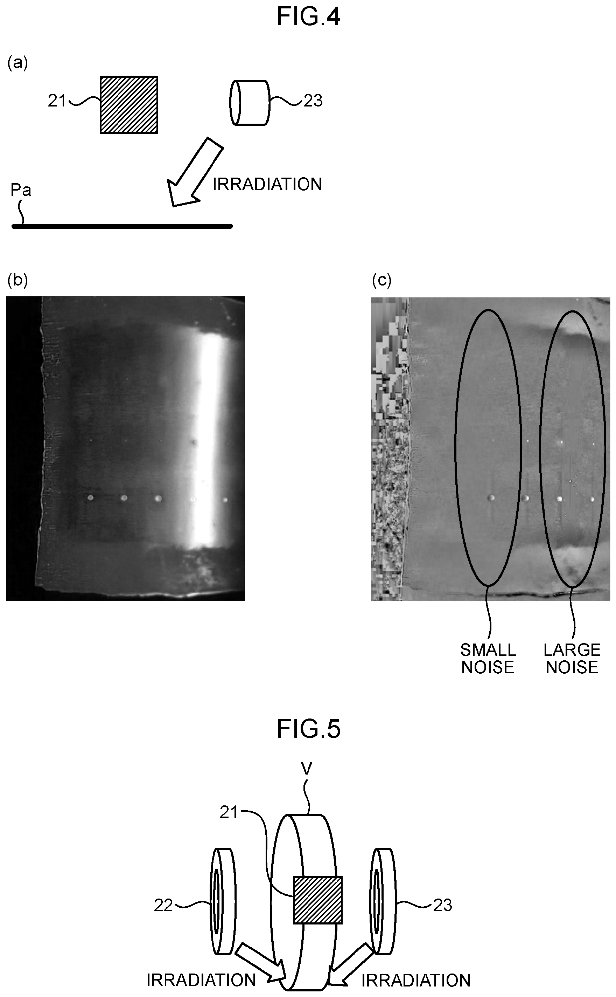

FIG. 4(a) illustrates a configuration of the downstream side optical system, FIG. 4(b) illustrates the inner surface image captured by the optical system illustrated in FIG. 4(a), and FIG. 4(c) illustrates a difference image obtained from the inner surface image illustrated in FIG. 4(b). Note that a reference sign Pa illustrated in FIG. 4(a) represents the inner surface of the steel pipe P. As illustrated in FIG. 4(c), in the center part of the difference image, the light projection/reception angle of the upstream side optical system is equal to the light projection/reception angle of the downstream side optical system, and the conditions are optically equivalent, and therefore, the pattern disappears due to the difference, and noise is reduced. In contrast, in the right part of the difference image, the illumination light from the upstream side light source 22 is closer to specular reflection, and the illumination light from the downstream side light source 23 is closer to backward diffuse reflection, and therefore, a pattern remains even after the difference, and the noise increases.

In order for the upstream side optical system and the downstream side optical system to have the same light projection/reception angle, it is preferable to set the vicinity of a plane passing through the full-circumference camera 21 and orthogonal to the axial direction of the steel pipe P, as the inspection target region, and set the axial direction position of the full-circumference camera 21 to a center position between both light sources. In addition, it is preferable to perform inspection with resolution and the light projection/reception angle constant at each position of the inner surface of the steel pipe P in the circumferential direction. Therefore, the full-circumference camera 21 and the center position between the light sources, in the plane orthogonal to the axial direction of the steel pipe P are preferably at the same position as a cross-sectional center position of the steel pipe P.

In addition, there is a light projection angle suitable for enhancing a signal of the recessed surface defect and removing a signal of the pattern. For example, for the mill scale steel material, the light projection angle is approximately 70 degrees. When the steel pipe P has a large inner diameter, irradiation at a low angle using a normal spot light source for each of the light sources requires a distance increased between the light source and the full-circumference camera 21, and the apparatus itself becomes too large to handle, which is disadvantageous in terms of cost. Therefore, as illustrated in FIG. 5, a ring light (also referred to as annular illumination) is used as the upstream side light source 22 and the downstream side light source 23. Therefore, irradiation at a low angle can be achieved while keeping the distance between the full-circumference camera 21 and the light source short, and the imaging unit 2 can be brought into a simple state with a small number of components.

Next, an embodiment will be described in which reflection of illumination light from the upstream side light source 22 and reflection of illumination light from the downstream side light source 23 are separately imaged. As described in Patent Literature 3, a shift in imaging positions of the two inner surface images upon generating the difference image prevents removal of the pattern signal, and the pattern signal remains as the noise in the difference image. In contrast, a method of stopping the imaging unit 2 in order to image the same position and capturing the two inner surface images requires time to inspect the entire length of the steel pipe P due to repeated stop and scanning. Therefore, for efficient inspection of the inner surface of the steel pipe P in the axial direction, the inner surface image is captured by emitting the illumination light while causing the imaging unit 2 to scan in the axial direction of the steel pipe P.

Therefore, a method is conceivable in which a time difference in imaging using the upstream side light source 22 and imaging using the downstream side light source 23 is sufficiently reduced relative to moving speed of the imaging unit 2 to instantaneously obtain the two inner surface images, for reduced shift in imaging position. In addition, there is also a dominant method in which color of the illumination light is changed in between imaging using the upstream side light source 22 and imaging using the downstream side light source 23 and a color camera configured to receive only reflections of respective colors with different channels is adopted to separate irradiation light. The former method requires a special device that captures the two inner surface images at high speed and controls light emission of each light source. In contrast, the color camera and a colored light source in the latter method are often used for general use, and therefore, the latter method can be implemented by an inexpensive and simple system, as compared with the former method. Furthermore, the former method enables a considerable reduction in irradiation time, and is advantageously resistant to image blur.

When the color camera and the colored light source are used, it is preferable to prevent interference between sensitivity wavelength bands. For example, consider reception of illumination light from a colored light source 1 and a colored light source 2 that have different wavelengths, by using a channel 1 and a channel 2 of the color camera. Here, it is assumed that the sensitivity wavelength bands of the channel 1 and the channel 2 are different from each other, the sensitivity wavelength band of the channel 1 matches a wavelength band of the colored light source 1, and the sensitivity wavelength band of the channel 2 substantially matches a wavelength band of the colored light source 2. Then, the illumination light of the colored light source 1 is received only by the channel 1, and the illumination light of the colored light source 2 is received only by the channel 2. At this time, it is preferable for the wavelength band of the colored light source 1 not to include a wavelength band having sensitivity to the channel 2. Furthermore, it is preferable for the wavelength band of the colored light source 2 not to include a wavelength band having sensitivity to the channel 1. Therefore, upon using a general color camera, it is most preferable to use channels having sensitivity in wavelength bands separated from each other, in particular, a red color channel and a blue color channel, and to select red and blue colors for the colored light sources 1 and 2, respectively. When the inspection target region is covered with a coating film or a layer having a specific color, it is preferable to use a wavelength band excluding that of the specific color. For example, in a steel material covered with red scale, there is a possibility that the red scale strongly reflects red illumination light and generates noise, and thus, it is preferable to select blue illumination light and green illumination light even when some interference occurs. Here, green represents a wavelength band in a wavelength range of 490 to 560 nm, blue represents a wavelength band in a wavelength range of 430 to 490 nm, and red represents a wavelength band in a wavelength range of 600 nm to 760 nm.

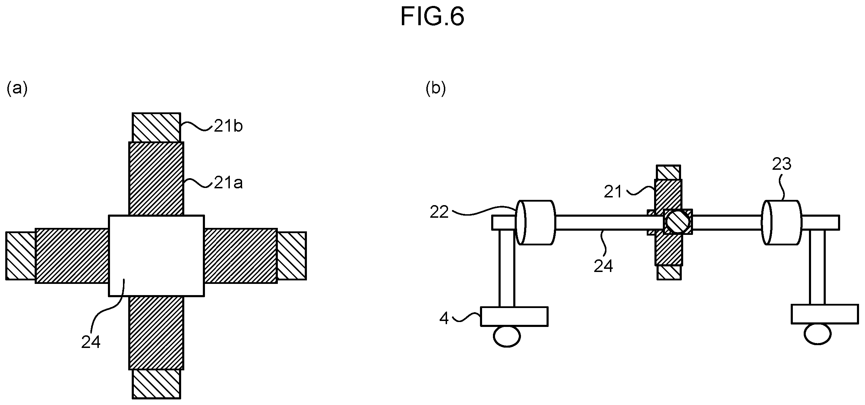

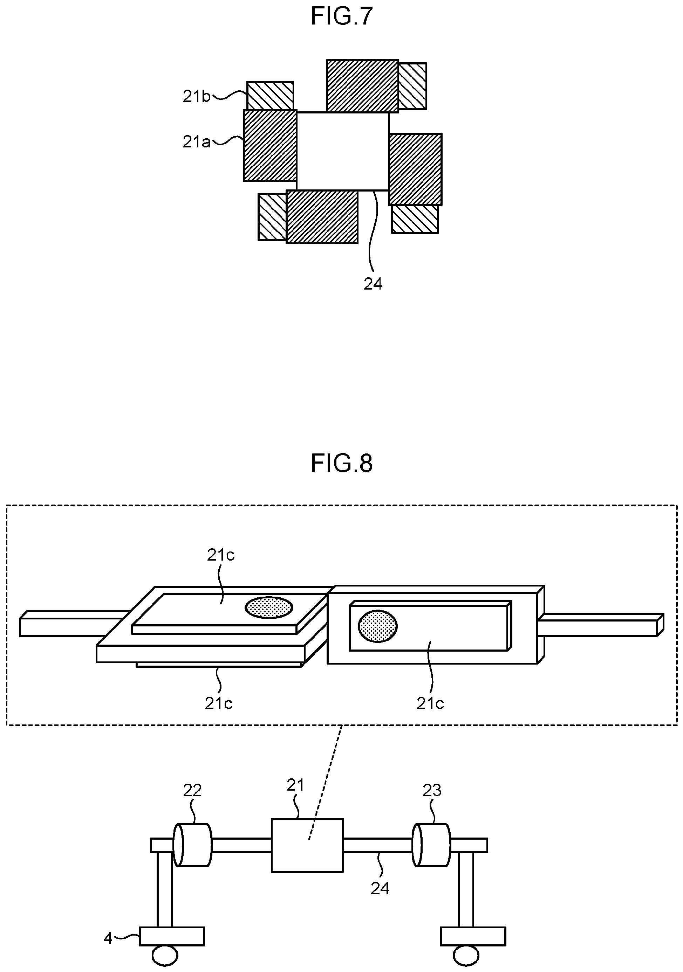

Next, a configuration of the full-circumference camera 21 will be described. When the inner surface of the steel pipe P is imaged using the full-circumference camera 21, it is desired to image the entire area in the circumferential direction at a predetermined position of the inner surface of the steel pipe P in the axial direction of the steel pipe P, while holding the full-circumference camera 21 so that a structure does not interfere with the field of view of the full-circumference camera 21. Therefore, as illustrated in FIGS. 6(a) and 6(b), a plurality of cameras 21a and lenses 21b for imaging the inner surface of the steel pipe P may be installed in a circumferential direction of a support rod 24 so that the fields of view of the cameras 21a adjacent in the circumferential direction are overlapped to capture the whole circumference of the inner surface of the steel pipe P. In this configuration, when the support rod 24 is internally wired, communication and power supply are enabled. Furthermore, in this configuration, each set of the cameras 21a and the lenses 21b has a field of view of an area expanded by 90° or more in the circumferential direction of the inner surface of the steel pipe P, and four sets of the cameras 21a and the lenses 21b are configured to image the entire area in the circumferential direction at a time. Furthermore, as illustrated in FIG. 7, the cameras 21a and the lenses 21b may be alternately arranged on the support rod 24 circumferentially to avoid interference, thereby achieving space saving.

In addition, in the examples illustrated in FIGS. 6 and 7, the four sets of the cameras 21a and the lenses 21b are installed, but any number of sets of the cameras 21a and the lenses 21b may be installed as long as the whole circumference of the inner surface of the steel pipe P can be imaged. Furthermore, wide-angle cameras enabling 180-degree imaging may be installed on both surfaces of a baseplate, for imaging the whole circumference of the inner surface of the steel pipe P. Furthermore, in this configuration, in order to avoid deterioration in performance of detecting the defect due to distortion or aberration at the edge of the field of view, two baseplates on which wide-angle cameras 21c are installed on both surfaces may be orthogonally installed in the structure, as illustrated in FIG. 8, so as to image the whole circumference of the inner surface of the steel pipe P by the four wide-angle cameras 21c. In this configuration as well, when the structure is internally wired, communication and power supply are enabled. In addition, even when the full-circumference camera is not used, the whole circumference of the inner surface of the steel pipe P may be imaged by scanning a camera a plurality of times in the steel pipe while changing the field of view in the circumferential direction and combining images and detection results obtained every time the scanning is performed.

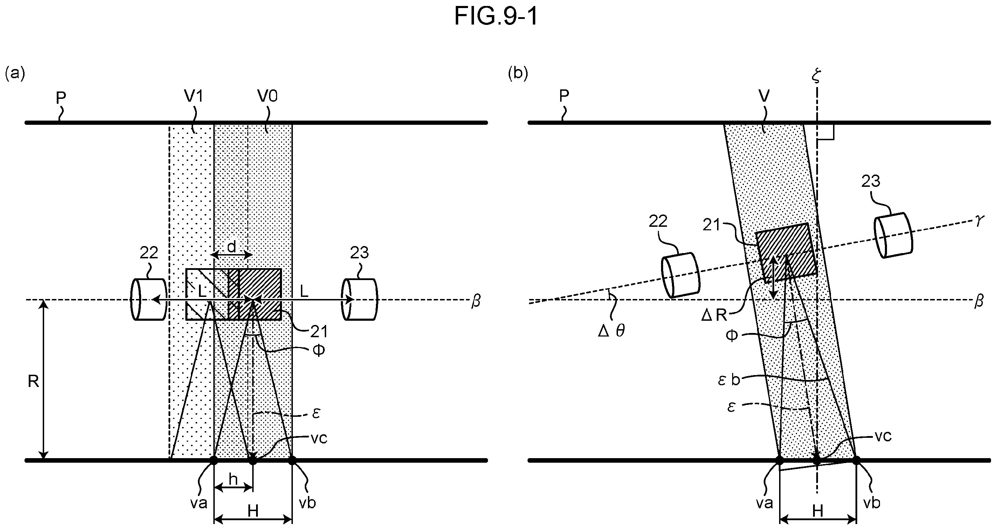

Furthermore, in order to image the entire area in the axial direction at a predetermined position of the inner surface of the steel pipe P in the circumferential direction as accurately as possible with a minimum loss, it is preferable to set some dimensions such as a size of the field of view V of the full-circumference camera 21, and an axial overlapping width h between the obtained inner surface images adjacent in the axial direction. Hereinafter, specific setting examples will be described with reference to FIGS. 9-1 and 9-2. In FIGS. 9-1 and 9-2, a left-right direction represents a horizontal direction and the axial direction of the steel pipe P, and an up-down direction represents a vertical direction and a radial direction of the steel pipe P. The axis (pipe axis) of the steel pipe P is $\beta$, and the central axis connecting the center position of the upstream side light source 22, a center position of the full-circumference camera 21, and the center position of the downstream side light source 23 is $\gamma$. The central axis $\gamma$ is also referred to as the central axis $\gamma$ of the imaging unit 2. Furthermore, in FIG. 9-1(a), the central axis $\gamma$ matches the pipe axis $\beta$, and an imaging direction $\varepsilon$ of the full-circumference camera 21 extends in the radial direction of the steel pipe P. In this state, the full-circumference camera 21 captures the inner surface image of the steel pipe P in the circumferential direction at the predetermined position on the pipe axis $\beta$. The

field of view of the full-circumference camera 21 on the inner surface of the steel pipe P, obtained at the predetermined position on the pipe axis β is defined as V. It is assumed that the field of view V of the full-circumference camera 21 is obtained at an angle of view φ in the axial direction of the steel pipe P. Two angles of view, that is, an angle of view in the axial direction of the steel pipe P and an angle of view in the circumferential direction can be considered, but only the angle of view in the axial direction of the steel pipe P is used in the following consideration.

As illustrated in FIG. 9-1(a), an inside radius of the steel pipe P is R, the distance from the full-circumference camera 21 to the upstream side light source 22 or the downstream side light source 23 is L, and an imaging pitch of the full-circumference camera 21 in a pipe axial direction is d. In FIG. 9-1(a), the field of view of the full-circumference camera 21 obtained at the predetermined position on the pipe axis β is V0, and the field of view of the full-circumference camera 21 when the full-circumference camera 21 moves leftward by the imaging pitch d on the pipe axis β is V1. The field of view V0 and the field of view V1 are adjacent to each other with the overlapping width h. A width of each of the fields of view V, V0, and V1 of the full-circumference camera 21 in the pipe axial direction is defined as a field of view width H. As illustrated in FIG. 9-1(b), a maximum displacement amount ΔR is an assumed maximum value of a shift amount of the full-circumference camera 21 from the pipe axis β when scanning the imaging unit 2 along the pipe axial direction, and a maximum inclination amount of the central axis γ in the vertical direction relative to the pipe axis β is Δθ. Here, the maximum displacement amount ΔR can also be referred to as a value obtained by converting a maximum value of a predetermined amount of deviation from the pipe axis β of the full-circumference camera 21 upon scanning of the imaging unit 2 in the pipe axial direction, into a distance. As illustrated in FIG. 9-1(a), in an ideal state in which the full-circumference camera 21 is on the pipe axis β, the field of view width H of the full-circumference camera 21 is in a range represented by the following mathematical formula (1). Note that in derivation of the mathematical formula (1), an approximation in which Δθ is sufficiently smaller than 1 rad and the influence thereof is negligible is used for simplification of calculation.

$$2(R - \Delta R)\tan\frac{1}{2}\phi < H < 2(R + \Delta R)\tan\frac{1}{2}\phi \qquad \cdots (1)$$

When the field of view width H of the full-circumference camera 21 is reduced, the field of view further decreases in size, leading to lack of the field of view, when the position of the full-circumference camera 21 changes during scanning and approaches the inner surface of the steel pipe P. In addition, it is preferable to set the overlapping width h in the axial direction of the inner surface images of the two adjacent fields of view V0 and V1 obtained by previous imaging and next imaging so that the target surface defect is not divided between the images. Therefore, in order to secure the overlapping width h in the axial direction even when the full-circumference camera 21 is displaced by the maximum displacement amount ΔR and the field of view is minimized, the imaging pitch d preferably satisfies the following mathematical formula (2). In other words, the imaging pitch d of the full-circumference camera 21 in the pipe axial direction is preferably smaller than a value obtained from the inside radius R of the steel pipe P, the maximum displacement amount ΔR of the image sensor assumed when scanning the imaging unit 2 along the axial direction of the steel pipe P, the overlapping width h in the axial direction of the two fields of view V of the full-circumference camera 21 adjacent in the pipe axial direction, and the angle of view φ of the image sensor in the axial direction.

$$d < 2(R - \Delta R)\tan\frac{1}{2}\phi - h \qquad \cdots (2)$$

In addition, as illustrated in FIG. 9-1(b), when the full-circumference camera 21 is inclined, a difference in the light projection/reception angle is maximized at an end vb of the field of view V in the axial direction of the steel pipe P. Note that, when the maximum inclination amount Δθ = 0, the difference in the light projection/reception angle between an end va and the end vb is approximately the same, and when the direction of inclination of the full-circumference camera 21 relative to the axial direction is reversed, that is, when the full-circumference camera 21 is inclined downward and rightward in the diagram of FIG. 9-1(b), the difference in the light projection/reception angle is maximized at the end va. An index indicating a difference in light projection/reception angle includes an angle difference α between a specular reflection direction of the illumination light from the light source and the imaging direction ε of the image sensor, and the angle difference α is preferably set so that inclination of the full-circumference camera 21 minimizes the angle difference α as small as possible between the upstream side optical system and the downstream side optical system. Note that in FIGS. 9-1(a) and 9-1(b), a reference sign vc represents a midpoint between the end va and the end vb.

Here, the angle difference α at a position of the end vb will be described in detail. First, as illustrated in FIG. 9-2(c), the specular reflection direction (a direction symmetrical to a surface normal ζ at the position of the end vb) of the illumination light emitted from the upstream side light source 22 to the position of the end vb is η1. At this time, an angle formed by the specular reflection direction η1 and εb, which is a direction of the full-circumference camera 21 viewed from the position of the end vb, is α1. Similarly, as illustrated in FIG. 9-2(d), the specular reflection direction (a direction symmetrical to the surface normal $\zeta$ at the position of the end vb) of the illumination light emitted from the downstream side light source 23 to the position of the end vb is defined as $\eta$2. At this time, an angle formed by the specular reflection direction $\eta$2 and $\varepsilon$b, which is the direction of the full-circumference camera 21 viewed from the position of the end vb, is $\alpha$2. The angle difference in the light projection/reception angle $\alpha$ is defined as $|\alpha 1-\alpha 2|$ by using the angles $\alpha$1 and $\alpha$2.

Therefore, it is preferable to perform the inspection so that the angle difference is equal to or less than an allowable angle difference at the position of the end vb where the angle difference is maximized, for efficient removal of the signal after the difference, and the angle difference $\alpha$ preferably satisfies the following mathematical formula (3). In other words, the angle difference $\alpha$ between the angle $\alpha$1 formed by the specular reflection direction $\eta$1 of the illumination light from the upstream side light source 22 and the imaging direction $\varepsilon$b of the image sensor, and the angle $\alpha$2 formed by the specular reflection direction $\eta$2 of the illumination light from the downstream side light source 23 and the imaging direction $\varepsilon$b of the image sensor is preferably larger than a value obtained from the inside radius R of the steel pipe P, the maximum displacement amount $\Delta$R of the image sensor determined in advance when scanning the imaging unit 2 along the pipe axial direction, the angle of view $\phi$ of the image sensor in the axial direction, and the distance L from the image sensor to the upstream side light source 22 or the downstream side light source 23.

$$\alpha > \left| \tan^{-1}\left( \frac{1}{R - \Delta R}\left(L - (R - \Delta R)\tan\frac{\phi}{2}\right)\right) - \tan^{-1}\left( \frac{1}{R - \Delta R}\left(L + (R - \Delta R)\tan\frac{\phi}{2}\right)\right)\right| + 2\theta$$

$$\cdots (3)$$

In addition, when the position of the full-circumference camera 21 is shifted in the circumferential direction from the pipe axis $\beta$, the resolution upon imaging the inner surface in a direction opposite to a direction of the shift decreases. Therefore, it is preferable for the resolution to be equal to or larger than a minimum resolution per pixel required from the inspection target at all positions in the field of view of the full-circumference camera 21. Therefore, when resolution per pixel where the position and/or inclination of the full-circumference camera 21 does not change relative to the pipe axis $\beta$ is r, and an allowable minimum resolution per pixel is r', the following mathematical formula (4) is preferably satisfied. In other words, the resolution per pixel r of the image sensor is preferably smaller than and higher than a value obtained from the inside radius R of the steel pipe P, the maximum displacement amount $\Delta$R of the image sensor assumed when scanning the imaging unit 2 in the axial direction of the steel pipe P, and the minimum resolution per pixel r' required from the inspection target. For example, when a required minimum resolution per pixel r' is 0.6 mm/pixel, the inside radius R of the steel pipe P is 50 mm, and the maximum displacement amount $\Delta$R is 10 mm, the resolution per pixel is preferably set to 0.5 mm/pixel or less.

$$r < \frac{R}{R + \Delta R}r' \qquad\qquad \cdots (4)$$

It is preferable not to make the field of view width H of the full-circumference camera 21 too large. When the angle of view $\phi$ of the full-circumference camera 21 in the axial direction is increased to increase the field of view width H of the full-circumference camera 21, the effect of the difference tends to decrease at the ends va and vb of the field of view V of the full-circumference camera 21 in the axial direction. This is because the difference between the light projection/reception angle of the upstream side optical system and the light projection/reception angle of the downstream side optical system increases as a distance from an irradiation position set on the inner surface of the steel pipe P increases as in the ends va and vb of the field of view V in the axial direction. The decrease of the effect of the difference described herein means that a signal of a harmless flat surface pattern cannot be sufficiently reduced.

Furthermore, a depth of field D preferably satisfies the following mathematical formula (5) in order to perform the inspection under a condition that the full-circumference camera 21 focuses even when the position and/or angle thereof fluctuates. In other words, the depth of field D of the image sensor is preferably smaller than a value obtained from the maximum displacement amount $\Delta$R of the image sensor assumed when scanning the imaging unit 2 in the axial direction of the steel pipe P.

$$D < 2\Delta R \qquad\qquad \cdots (5)$$

From the above considerations, it is desirable for the central axis $\gamma$ of the imaging unit 2 to be stably scanned along the axis $\beta$ of the steel pipe P so that the maximum displacement amount $\Delta$R and the maximum inclination amount $\Delta\theta$ of the full-circumference camera 21 upon scanning are minimized as much as possible, and consideration of the optical systems by assuming the position and inclination of the full-circumference camera 21 makes it possible to inspect an area in the axial direction with respect to the predetermined position of the inner surface of the steel pipe P in the circumferential direction as accurately as possible with a minimum loss. Note that, in order to perform the inspection described above, optical adjustment is performed in advance so as not to acquire an image saturated or out of focus. Furthermore, in the above examples of the full-circumference camera 21, the fields of view V, V0, and V1 are considered to have a width H in the axial direction of the steel pipe P and a width of 360° in the circumferential direction thereof, but are not limited thereto. It is sufficient that the width in the circumferential direction is less than 360° and more than 0°, and for example, the same effects can be obtained even by a width of 45°, 30°, 5°, or 1°.

[Image processing]

Finally, a specific example of the image processing performed by the processing unit 4 will be described with reference to FIGS. 10 to 13.

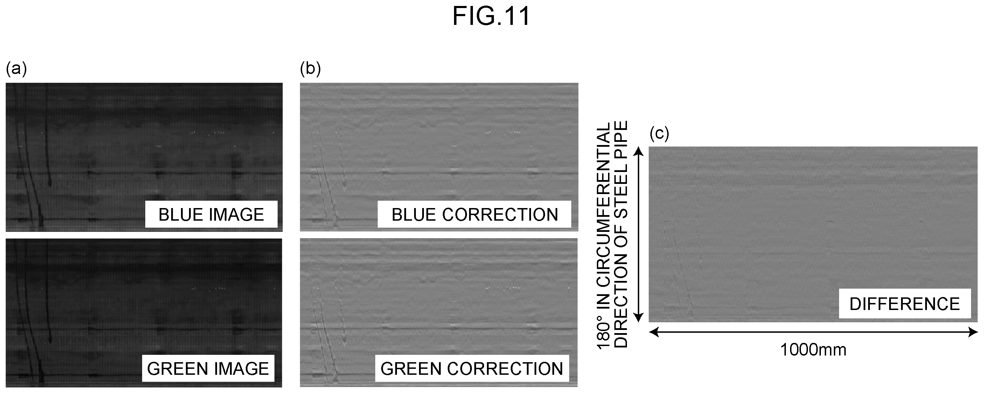

FIG. 10 is a flowchart illustrating a procedure of image processing according to an embodiment of the present invention. Note that, in the present embodiment, a 360 degree camera including a fisheye camera on both surfaces of a baseplate as the full-circumference camera 21, a ring light to emit green illumination light as the upstream side light source 22, and a ring light to emit blue illumination light as the downstream side light source 23 are used. As illustrated in FIG. 10, in the image processing of the present embodiment, first, the processing unit 4 splits the color image captured by the full-circumference camera 21 into channels (Step S1), and clips images in the same inspection range (see FIG. 11(a)) from blue channel image and green channel image having been obtained (Steps S2a and S2b).

Next, after performing the shading correction on the clipped blue channel image and green channel image (see Steps S3a and S3b, and FIG. 11(b)), the processing unit 4 generates the difference image between the blue channel image and the green channel image (see Step S4 and FIG. 11(c)). Note that the order of splitting the channels and clipping of the image in the inspection range, and clipping of the image in the inspection range and shading correction may be changed. When clipping of the image in the inspection range is performed first, there is an advantage that an amount of calculation is reduced, and when the shading correction is performed before clipping of the image in the inspection range, there is an advantage that the image is hardly affected by an unsteady portion generated at an end of the image during calculation.

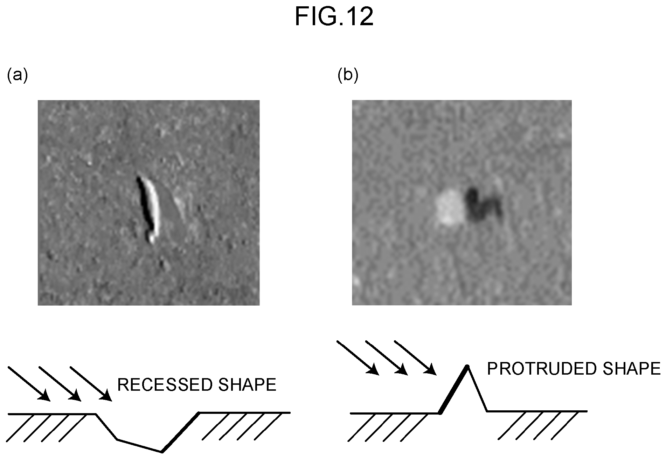

Next, the processing unit 4 binarizes the difference image with a predetermined luminance threshold to extract a light portion and a dark portion from the difference image (Step S5), and performs dilation/erosion processing to change a pixel corresponding to the light portion to the dark portion, and performs dilation/erosion processing to change a pixel corresponding to the dark portion to the light portion (Step S6). Then, the processing unit 4 extracts a pattern of the light portion and the dark portion indicating the recessed surface defect, from the binarized image after the dilation/erosion processing, as a defect candidate portion (Step S7). As illustrated in FIGS. 12(a) and 12(b), the pattern of the light portion and the dark portion is reversed between the recessed surface defect and a protruded surface defect, and therefore, only the pattern of the light portion and the dark portion indicating the recessed surface defect can be efficiently extracted from the difference image. Note that the pattern of the light portion and the dark portion may be extracted by comparing the positions of the light portion and the dark portion after the binarization processing.

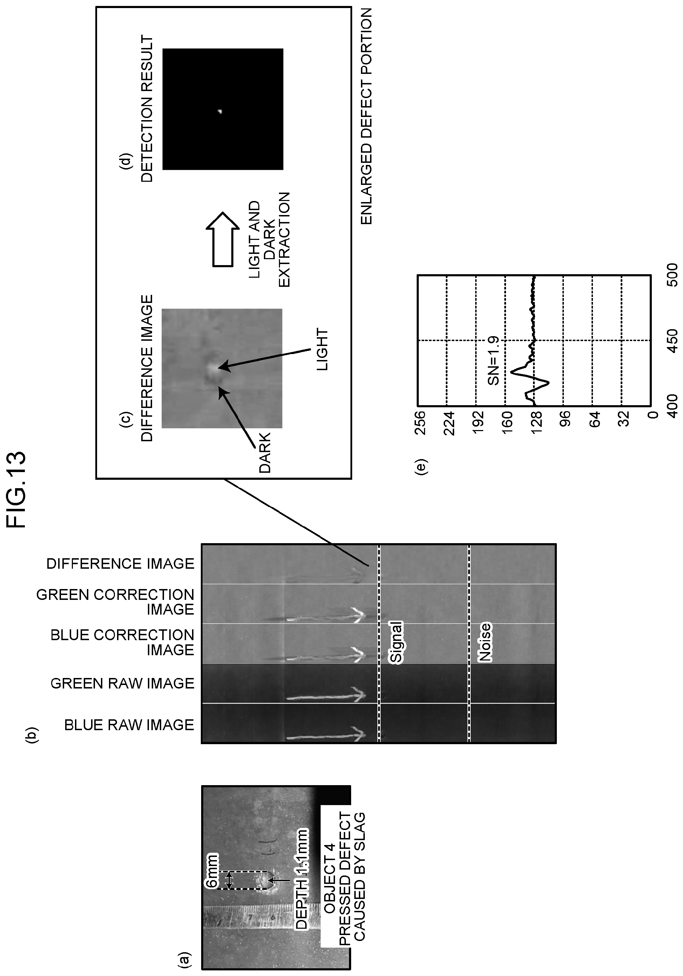

Finally, the processing unit 4 uses machine learning to determine whether the defect candidate portion is a defect, and determine a defect type/level. A determination rule may be determined manually, or may be automatically generated by a general machine learning method using features, such as a regression model (linear regression, logistic regression, multiple regression, support vector machine, non-linear kernel, or the like), decision tree model, random forest, Bayesian estimation model, Gaussian mixture model, or a method obtained by boosting these models. In addition, a plurality of machine learning methods may be combined. FIG. 13 illustrates an example of the recessed surface defect detected by the above processing. FIG. 13(a) illustrates an example of detection of a defect called pressed defect caused by slag on the inner surface of the steel pipe. FIG. 13(b) illustrates a process of image processing. In the image processing illustrated in FIG. 13(b), the color image is split into channels in the processing in Step S1, and a blue raw image and a green raw image are obtained by clipping processing for the inspection range in Steps S2a and S2b. Thereafter, a blue correction image and a green correction image are obtained by the shading correction in Steps S3a and S3b, and then the difference image is calculated by the difference processing in Step S4 by using both the images. In the difference image illustrated in FIG. 13(c), the pressed defect caused by slag can be clearly found as the light and dark pattern. FIG. 13(e) is a graph showing an intensity change in a horizontal direction with respect to substantially the center position in the vertical direction in FIG. 13(c). As illustrated in FIG. 13(e), a defect portion appears as a stronger signal compared with a portion having no defect. Then, the light and dark pattern is extracted from the difference image by the processing in Steps S5 to S7. A result of the extraction of the light and dark pattern is illustrated as a detection result of a binary image in FIG. 13(d). The detection result of the binary image illustrated in FIG. 13(d) has the light portion and the dark portion at both ends, and features are calculated from the light portion and the dark portion, and whether the detection result is actually a harmful defect is determined by determination processing in Step S8. Thereafter, the information about the detected surface defect is output, guidance is given to an operator, and outflow of the surface defect is suppressed. In addition, the information about the detected surface defect can be transmitted to a server device, and also used for collection, determination of possibility of shipment and necessity of maintenance, and the like. Note that, in the present embodiment, the color camera and the color illumination have been used, but similar effect can also be obtained by combining a camera capable of high-speed imaging and pulse irradiation for acquisition of two inner surface images.

[Configuration of scanning unit]

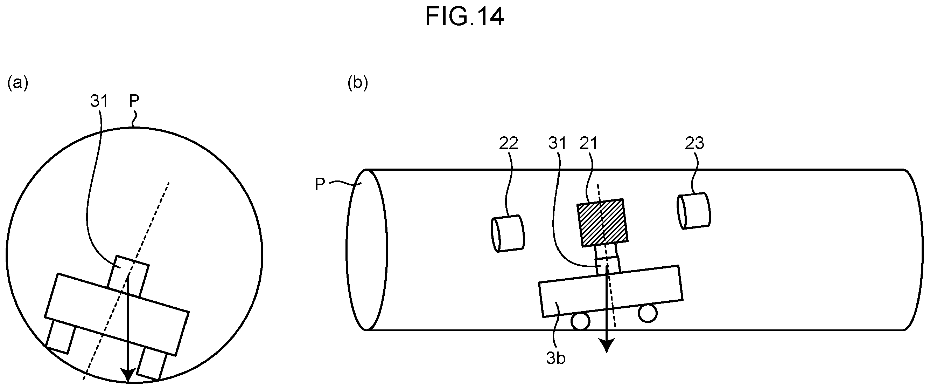

Next, a configuration of the scanning unit 3 will be described. As described above, the scanning unit 3 scans the imaging unit 2 in the axial direction of the steel pipe P so as to minimize alignment variation such as a change in position and a change in inclination of the imaging unit 2 in the circumferential direction and the axial direction. Both manual and automatic scanning methods are considered, but in automatic operation, it is preferable to perform control so as to minimize the alignment variation as much as possible. For example, when the scanning unit 3 includes a traveling mechanism of a wheel type, crawler type, or the like and is self-propelled, the scanning unit 3 preferably scans a circumferential fixed position on the inner surface of the steel pipe P in parallel with the axial direction. However, as illustrated in FIGS. 14(a) and 14(b), there is a concern that the position of the scanning mechanism 3b fluctuates in the circumferential direction or the axial direction. Therefore, it is preferable to detect a vertically downward direction by using an acceleration sensor 31 to control the scanning mechanism 3a so that the vertically downward direction is always oriented in a constant direction. This configuration enables the scanning unit 3 to be stably self-propelled.

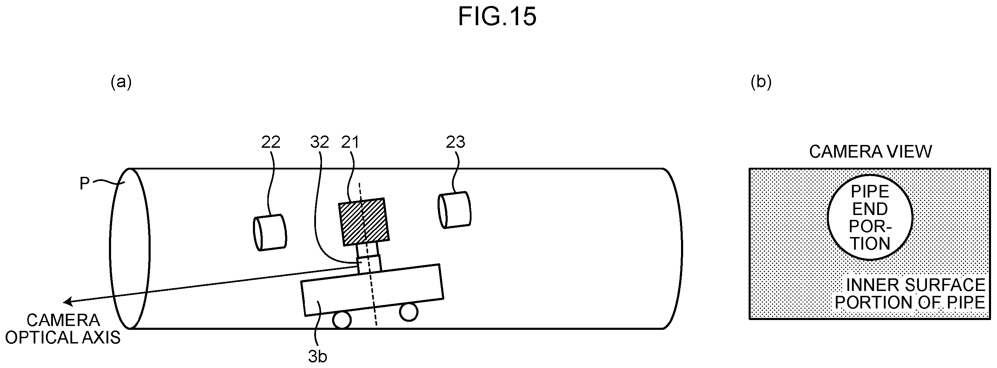

In addition, as illustrated in FIGS. 15(a) and 15(b), it is preferable to install a camera 32 in the scanning mechanism 3b so that an optical axis matches the axial direction of the steel pipe P during normal traveling and make travel while imaging a pipe end with the camera 32. At this time, when a direction of self-propelling changes from the axial direction of the steel pipe P, the center position of the pipe end in a captured image captured by the camera 32 changes. Therefore, controlling the scanning mechanism 3b so that the center position of the pipe end in the captured image is always constant enables stable scanning in parallel with the axial direction. Instead of the center position of the pipe end, a target may be installed outside the pipe to detect a shift in the traveling direction or control the scanning mechanism 3b, on the basis of a position of the target in the captured image.

[Mapping]

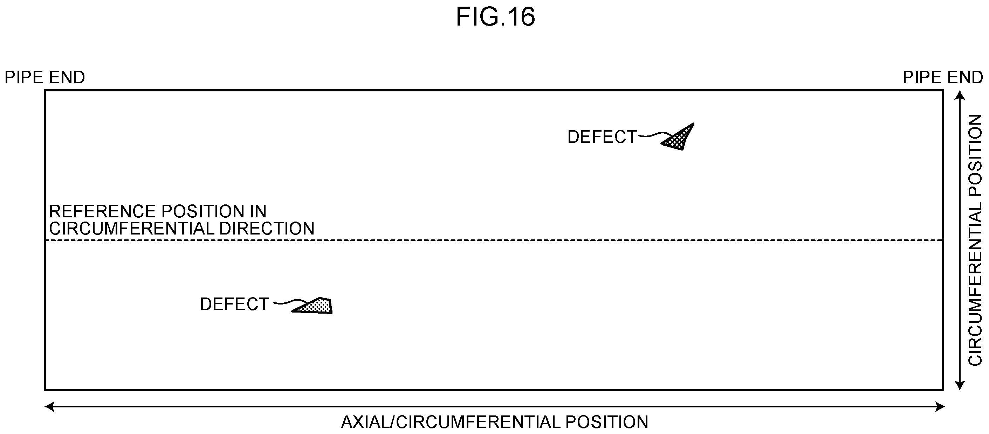

A defect map may be created on the basis of information such as an obtained position and image, defect type, and level of the defect. The defect map visualizes defect occurrence information about the defect and a shape of the defect in an easy-to-understand manner, and is useful for quality control of the inner surface of the pipe, such as the guidance to the operator. An example of the defect map is illustrated in FIG. 16. In the defect map illustrated in FIG. 16, developing the circumferential direction and the axial direction of the steel pipe P in a rectangular shape and clearly indicating a defect occurrence position enable understanding of the defect occurrence information. In addition, the coordinates, defect type, level, image, and the like of the defect may be shown together with the defect occurrence position. A reference position in the circumferential direction is preferably a position serving as a mark in the vertically downward direction, or a mark in the axial direction of the steel pipe P. For example, for a welded steel pipe, a weld bead position set as the reference position makes it easy to identify the defect occurrence position.

[Marking]

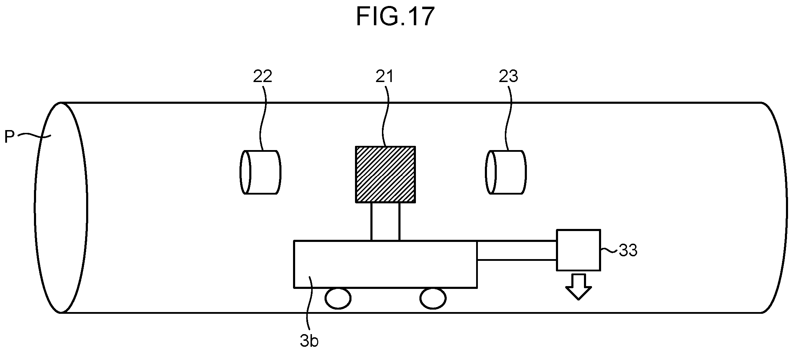

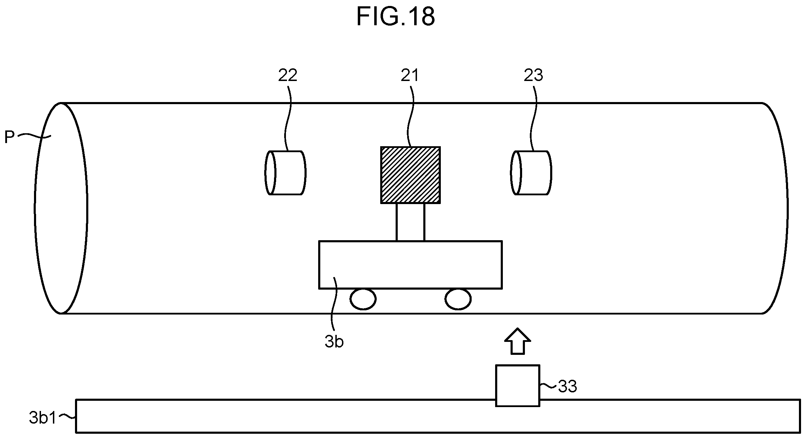

When the defect is detected during scanning of the inner surface of the steel pipe P, the defect portion may be marked to visualize a defect occurrence state. In this case, for example, as illustrated in FIG. 17, a marking device 33 may be provided in the scanning mechanism 3b, or as illustrated in FIG. 18, for example, a scanning mechanism 3b1 that enables the marking device 33 in the axial direction or the circumferential direction may be provided outside the steel pipe P. In addition, information of the defect map obtained after an inner surface inspection process may be used to mark the defect portion. Marking the defect position further ensures understanding of the defect portion, reducing the risk of outflow of the defect.

[Secondary inspection]

In the present invention, it is difficult to obtain accurate depth information and the like about the defect. Therefore, the defect position or the like obtained by the present invention may be precisely reinspected using another method for defect detection. For a method of reinspection, a sensory inspection method performed by a person in the pipe for visual check, a three-dimensional shape measurement method using a laser or the like, a magnetic measurement method such as magnetic flux leakage or eddy current examination, or the like can be used. Application of each of these methods to the entire inner surface of the steel pipe P requires a lot of inspection time, reducing inspection efficiency. However, if the inspection is performed only for the defect detected by the present invention, the inspection can be performed precisely without reducing the inspection efficiency. In addition, identification of a position for reinspection may be performed using the defect map described above or may be performed by detecting the marking described above.

[Repair]

The detected defect in the inner surface of the steel pipe P may be repaired with a grinder or the like. In this case, the worker may get into the steel pipe P to make repair, or a self-propelled inner surface repair mechanism may be used to make repair. In addition, a repair position is preferably determined by the defect position on the defect map, a marking position, a position determined to need repair according to an inspection result of secondary inspection, or a combination of these pieces of information. Note that the secondary inspection may be performed again after the repair.

Note that in the present embodiment, the present invention has been applied to the steel pipe, but as a matter of course, the present invention is applicable to a pipe-shaped product other than the steel pipe. According to the present embodiment, scanning is performed in parallel to the axial direction of the steel pipe P where the inspection range as the field of view of the image sensor has a width in the axial direction of the steel pipe P, and therefore, even when the sensor head is inclined due to vibration or the like and the field of view changes, the overlapping width which is provided in advance in each field of view makes it possible to perform inspection of the inner surface of the steel pipe P in the axial direction with a minimum loss. In addition, when the image sensor is the full-circumference image sensor (i.e., the full-circumference camera 21), it is possible to obtain an image that covers the entire area in the circumferential direction of the inner surface of the steel pipe P in a single imaging. Therefore, it is possible to facilitate inspection of the inner surface of the steel pipe P in the circumferential direction with a minimum loss, for the reasons that high work efficiency can be achieved with only a single imaging instead of multiple imaging, no processing is required to merge the obtained inner surface images, alignment of images in the circumferential direction is not required, and the inner surface of the steel pipe P can be imaged in the circumferential direction without a loss. Furthermore, use of the annular illumination as the illumination enables compact irradiation at a low angle even when the pipe diameter is large, and further enables improvement of the performance of detecting the recessed surface defect. In addition, the full-circumference camera 21 and the light sources are small in size with low power consumption, and therefore, there is also an advantage that the sensor head has excellent portability.

In addition, the surface inspection apparatus according to an embodiment of the present invention is also applicable to a manufacturing apparatus for a pipe. In this case, the inner surface of the pipe is inspected by the surface inspection apparatus according to an embodiment of the present invention to manufacture the pipe on the basis of a result of the inspection. Furthermore, a surface inspection method according to an embodiment of the present invention is also applicable to a manufacturing method for a pipe. In this case, the inner surface of the pipe is inspected by the surface inspection method according to an embodiment of the present invention to manufacture the pipe on the basis of a result of the inspection. Furthermore, the surface inspection method according to an embodiment of the present invention is also applicable to a quality control method for a pipe. In this case, the inner surface of the pipe is inspected by the surface inspection method according to an embodiment of the present invention, and the quality of the pipe is controlled on the basis of a result of the inspection. In addition, it is also possible to obtain a pipe whose quality is ensured by the surface inspection method according to an embodiment of the present invention Here, in other words, the wording "quality is ensured" represents "Information indicating that the pipe satisfies a predetermined condition is added to the defect detected by the surface inspection method". Alternatively, the wording may represent "information indicating an acceptable material is added". Specifically, it means that inspection results obtained by the surface inspection method according to an embodiment of the present invention are described in an inspection certificate (e.g., mill test certificate) or the like attached to the pipe. In this case, for example, if a predetermined condition is satisfied for the detected defect, the pipe is handled as the acceptable material. It is desirable to handle a pipe having no defect with a width of 2 mm or more and a depth of 0.2 mm or more, as the acceptable material.

Although the embodiments to which the invention made by the present inventors is applied have been described above, the present invention is not limited to the descriptions and drawings constituting part of the disclosure of the present invention according to the present embodiment. In other words, other embodiments, examples, operations and techniques, and the like made by those skilled in the art and the like on the basis of the present embodiment are all included in the scope of the present invention.

Industrial Applicability

According to the present invention, the surface inspection apparatus for a pipe and the surface inspection method for a pipe that make it possible to accurately detect the recessed surface defect generated in the inner surface of the pipe having the pattern on the surface, with the simple device configuration. Furthermore, according to the present invention, it is possible to provide the manufacturing apparatus for a pipe, the manufacturing method for a pipe, the quality control method for a pipe, and the pipe, for providing a high-quality pipe.

Reference Signs List

1 SURFACE INSPECTION APPARATUS
2 IMAGING UNIT
3 SCANNING UNIT
3a ROD-SHAPED MEMBER
3b, 3b1 SCANNING MECHANISM
4 PROCESSING UNIT
21 FULL-CIRCUMFERENCE CAMERA
21a CAMERA
21b LENS
21c WIDE-ANGLE CAMERA
22 UPSTREAM SIDE LIGHT SOURCE
23 DOWNSTREAM SIDE LIGHT SOURCE
24 SUPPORT ROD
31 ACCELERATION SENSOR
32 CAMERA
33 MARKING DEVICE
P STEEL PIPE

**Claims**

1. A surface inspection apparatus for a pipe, the apparatus inspecting an inner surface of the pipe as an inspection target region, the apparatus comprising:

   an imaging unit that includes an image sensor having a field of view on a surface of the inner surface, and two distinguishable light sources, and that is arranged on an axis of the pipe such that the image sensor is sandwiched between the two distinguishable light sources;
   a processing unit configured to acquire images obtained by imaging reflection of each of the light sources, generate a difference image between two acquired images, and detect a surface defect in the inspection target region from the generated difference image; and
   a scanning unit configured to scan the imaging unit along an axial direction of the pipe,
   wherein the two distinguishable light sources irradiate a same predetermined inspection target region with illumination light, and
   the image sensor captures an image of the predetermined inspection target region.

2. The surface inspection apparatus for the pipe according to claim 1, wherein an imaging pitch of the image sensor along the axial direction of the pipe is smaller than a value obtained from an inside radius of the pipe, a maximum displacement amount of the image sensor assumed when scanning the imaging unit along the axial direction of the pipe, an overlapping width in the axial direction of two fields of view of the image sensor adjacent in the axial direction of the pipe, and an angle of view of the image sensor in the axial direction of the pipe.

3. The surface inspection apparatus for the pipe according to claim 1 or 2, wherein the image sensor is a full-circumference image sensor that is configured to capture an image covering an entire area in a circumferential direction of an inner surface of the pipe in a single imaging.

4. The surface inspection apparatus for the pipe according to any one of claims 1 to 3, wherein an angle difference between an angle formed by a specular reflection direction of illumination light from an upstream side light source that is the light source arranged on an upstream side from the image sensor in an axial direction of the pipe and an imaging direction of the image sensor, and an angle formed by a specular reflection direction of illumination light from a downstream side light source that is the light source arranged on a downstream side from the image sensor in the axial direction of the pipe and the imaging direction of the image sensor, is larger than a value obtained from an inside radius of the pipe, a maximum displacement amount of the image sensor assumed when scanning the imaging unit along the axial direction of the pipe, an angle of view of the image sensor in the axial direction of the pipe, and a distance from the image sensor to the upstream side light source or the downstream side light source.

5. The surface inspection apparatus for the pipe according to any one of claims 1 to 4, wherein the two distinguishable light sources are annular illumination.

6. The surface inspection apparatus for the pipe according to any one of claims 1 to 5, wherein the scanning unit scans the image sensor along a central axis of the pipe.

7. A surface inspection method for a pipe for inspecting an inner surface of the pipe as an inspection target region, the method comprising:

a processing step of acquiring images obtained by imaging reflection of each of the light sources, generating a difference image between two acquired images, and detecting a surface defect in the inspection target region from the generated difference image, by using an imaging unit that includes an image sensor having a field of view on a surface of the inner surface, and two distinguishable light sources, and that is arranged on an axis of the pipe such that the image sensor is sandwiched between the two distinguishable light sources; and
a scanning step of scanning the imaging unit along an axial direction of the pipe,
wherein the processing step includes a step of using the two distinguishable light sources to irradiate a same predetermined inspection target region with illumination light, and using the image sensor to capture an image of the predetermined inspection target region.

8. The surface inspection method for the pipe according to claim 7, wherein an imaging pitch of the image sensor in the axial direction of the pipe is smaller than a value obtained from an inside radius of the pipe, a maximum displacement amount of the image sensor assumed when scanning the imaging unit along the axial direction of the pipe, an overlapping width in the axial direction of two fields of view of the image sensor adjacent in the axial direction of the pipe, and an angle of view of the image sensor in the axial direction of the pipe.

9. The surface inspection method for the pipe according to claim 7 or 8, wherein the image sensor is a full-circumference image sensor that is configured to obtain an image covering an entire area in a circumferential direction of an inner surface of the pipe in a single imaging.

10. A manufacturing apparatus for a pipe comprising the surface inspection apparatus for the pipe according to any one of claims 1 to 6.

11. A manufacturing method for a pipe comprising inspecting an inner surface of the pipe by using the surface inspection method for the pipe according to any one of claims 7 to 9 to manufacture the pipe based on an inspection result.

12. A quality control method for a pipe comprising inspecting an inner surface of the pipe by using the surface inspection method for the pipe according to any one of claims 7 to 9 to control quality of the pipe based on an inspection result.

13. A pipe that has quality ensured by the surface inspection method for the pipe according to any one of claims 7 to 9.

EP 4 764 470 A1

# FIG.1

OUTPUT INSPECTION
RESULT

PROCESS-
ING UNIT

SCANNING DIRECTION

FIG.2

FIG.3

SCANNING DIRECTION

# FIG.4

(a)

(b)

(c)

SMALL NOISE

LARGE NOISE

# FIG.5

FIG.6

(a)

(b)

## FIG.7

21b

21a

24

## FIG.8

21c

21c

21c

22

21

23

24

4

FIG.9-1

(a)

(b)

FIG.9-2

EP 4 764 470 A1

# FIG.10

COLOR IMAGE

↓

**S1**

| CHANNEL SPLIT |

BLUE CHANNEL IMAGE                    GREEN CHANNEL IMAGE

↓ **S2a**                             ↓ **S2b**

| CLIPPING OF INSPECTION RANGE |      | CLIPPING OF INSPECTION RANGE |

↓ **S3a**                             ↓ **S3b**

| SHADING CORRECTION PROCESSING |     | SHADING CORRECTION PROCESSING |

↓

**S4**

| DIFFERENCE PROCESSING |

↓

**S5**

| LIGHT PORTION BINARIZATION/ DARK PORTION BINARIZATION PROCESSING |

↓

**S6**

| DILATION/EROSION PROCESSING |

↓

**S7**

| LIGHT AND DARK PATTERN EXTRACTION PROCESSING |

↓

**S8**

| DEFECT DETERMINATION USING MACHINE LEARNING |

↓

DEFECT DETECTION

FIG.11

(a) BLUE IMAGE

GREEN IMAGE

(b) BLUE CORRECTION

GREEN CORRECTION

(c) DIFFERENCE

180° IN CIRCUMFERENTIAL DIRECTION OF STEEL PIPE

1000mm

# FIG.12

(a)

(b)

RECESSED SHAPE

PROTRUDED SHAPE

FIG.13

(a) DEPTH 1.51mm 6mm
OBJECT 4 PRESSED DEFECT CAUSED BY SLAG

(b)
DIFFERENCE IMAGE
GREEN CORRECTION IMAGE
BLUE CORRECTION IMAGE
GREEN RAW IMAGE
BLUE RAW IMAGE
Signal
Noise

(c) DIFFERENCE IMAGE
LIGHT
DARK

LIGHT AND DARK EXTRACTION

(d) DETECTION RESULT

ENLARGED DEFECT PORTION

(e) SN=1.9

256 224 192 160 128 96 64 32 0
400 450 500

FIG.14

(a)

(b)

EP 4 764 470 A1

FIG.15

# FIG.16

PIPE END

PIPE END

DEFECT

REFERENCE POSITION IN
CIRCUMFERENTIAL DIRECTION

DEFECT

CIRCUMFERENTIAL POSITION

AXIAL/CIRCUMFERENTIAL POSITION

EP 4 764 470 A1

EP 4 764 470 A1

## FIG.17

FIG.18

EP 4 764 470 A1

## INTERNATIONAL SEARCH REPORT

| International application No. |
| --- |
| **PCT/JP2024/027858** |

| | |
| --- | --- |
| **A.** | **CLASSIFICATION OF SUBJECT MATTER** |

*G01N 21/954*(2006.01)i; *G01N 21/84*(2006.01)i
FI: G01N21/954 A; G01N21/84 E

According to International Patent Classification (IPC) or to both national classification and IPC

| | |
| --- | --- |
| **B.** | **FIELDS SEARCHED** |

Minimum documentation searched (classification system followed by classification symbols)

G01N21/84-G01N21/958

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | 大野 紘明, 「ツイン投光差分方式表面検査装置」, 一般財団法人機械振興協会のホームページ [online], 20 October 2021, [retrieved on 20 August 2024] , Internet: <URL:https://warp.ndl.go.jp/info:ndljp/pid/13581738/www.jspmi.or.jp/system/file/3/1345/N55-04.pdf>, (ONO, Hiroaki, Surface Inspection System Using by Twin-illumination and Subtraction Technique), non-official translation (Website of JAPAN SOCIETY FOR THE PROMOTION OF MACHINE INDUSTRY) pp. 13-16, fig. 1-10 | 1, 3, 5-7, 9-13 |
| A | | 2, 4, 8 |
| Y | JP 2012-159491 A (NIPPON STEEL CORPORATION) 23 August 2012 (2012-08-23) paragraphs [0004], [0012], [0027]-[0096], fig. 2 | 1, 3, 5-7, 9-13 |
| A | | 2, 4, 8 |
| Y | JP 2022-150220 A (SANYO SPECIAL STEEL CO., LTD.) 07 October 2022 (2022-10-07) fig. 1-2 | 1, 3, 5-7, 9-13 |
| A | | 2, 4, 8 |

| ✓ Further documents are listed in the continuation of Box C. | ✓ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 August 2024** | **03 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
|---|
| **PCT/JP2024/027858** |

### C. DOCUMENTS CONSIDERED TO BE RELEVANT

| Category* | Citation of document, with indication, where appropriate, of the relevant passages | Relevant to claim No. |
|---|---|---|
| A | US 2018/0202944 A1 (AEGION COATING SERVICES, LLC) 19 July 2018 (2018-07-19) entire text | 1-13 |

Form PCT/ISA/210 (second sheet) (July 2022)

## INTERNATIONAL SEARCH REPORT
### Information on patent family members

International application No.

**PCT/JP2024/027858**

| Patent document cited in search report | | | Publication date (day/month/year) | Patent family member(s) | Publication date (day/month/year) |
|---|---|---|---|---|---|
| JP | 2012-159491 | A | 23 August 2012 | (Family: none) | |
| JP | 2022-150220 | A | 07 October 2022 | (Family: none) | |
| US | 2018/0202944 | A1 | 19 July 2018 | WO 2018/0202944 A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011069616 A
- JP 2015125089 A

- JP 2015210150 A

**Non-patent literature cited in the description**

- Development of Twin Illumination and Subtraction Technique for Surface Inspection. *35th Sensing Forum*, August 2018, vol. 4 (1B1), 105-110